# EUROPÄISCHE PATENTSCHRIFT

(11) **EP 3 797 228 B1**
(45) Veröffentlichungstag und Bekanntmachung des Hinweises auf die Patenterteilung: **28.12.2022**
(21) Anmeldenummer: 18730651.9
(22) Anmeldetag: 23.05.2018
(51) Int. Cl.: F16D 55/226, F16D 65/00, F16D 65/092, F16D 55/00

(54) **RICHTUNGSPFEIL AM BREMSENTRÄGER**
DIRECTIONAL ARROW ON THE BRAKE CARRIER
FLÈCHE DE DIRECTION SUR SUPPORT DE FREIN

(43) Veröffentlichungstag der Anmeldung: 31.03.2021
(73) Patentinhaber: ZF CV Systems Europe BV, 1170 Brussels (BE)
(72) Erfinder: REDEMANN, Bernward, 68766 Hockenheim (DE); SCHERER, Vitalij, 69181 Leimen (DE)
(74) Vertreter: Rabe, Dirk-Heinrich
(86) Internationale Anmeldenummer: PCT/EP2018/063512
(87) Internationale Veröffentlichungsnummer: WO 2019/223862

(56) Entgegenhaltungen:
- WO-A1-2015/022081
- WO-A1-2015/049283
- WO-A1-2017/178096
- DE-A1-102008 003 526
- US-A- 6 135 246

## Beschreibung

Die Erfindung betrifft eine Fahrzeugbremse, insbesondere eine Nutzfahrzeug-Scheibenbremse, mit einem Bremsenträger mit mindestens einer Bremsbelagaufnahme, mindestens einem Bremsbelag, welcher in der Bremsbelagaufnahme axial verschiebbar geführt und abgestützt ist, und einem axial relativ zu dem Bremsenträger bewegbaren Bremssattel, wobei der Bremsenträger eine Einlaufseite aufweist, an der die Bremsscheibe bei einer Rotation in eine erste Rotationsrichtung in den Bremsenträger einläuft, und einer Auslaufseite, an der die Bremsscheibe bei Rotation in die erste Rotationsrichtung aus dem Bremsenträger ausläuft.

Bei Fahrzeugbremsen ergibt sich im Allgemeinen die Herausforderung, dass für eine Bremsung eines Fahrzeuges aus der Vorwärtsfahrt, in welcher typischerweise höherer Geschwindigkeiten erzielt werden, eine Fahrzeugbremse mechanisch stärker belastet wird als im Rahmen von Bremsvorgängen aus typischerweise langsamer Rückwärtsfahrt. Auf Basis dieser Erkenntnis sind aus dem Stand der Technik Fahrzeugbremsen bekannt, bei denen der Bremsenträger bezogen auf die Einlaufseite und die Auslaufseite der Bremsscheibe asymmetrisch ausgestaltet ist.

Als Einlaufseite wird jene Seite eines Bremssattels oder eines Bremsenträgers bezeichnet, an der eine Bremsscheibe gewissermaßen in den Bremssattel oder Bremsenträger einläuft - also an der mit anderen Worten ein Abschnitt einer Bremsscheibenoberfläche bei Rotation in die erste Rotationsrichtung das erste Mal von dem Bremssattel oder dem Bremsenträger zumindest teilweise überdeckt wird. An der Auslaufseite wiederum verlässt ein solcher gedachter Abschnitt einer Bremsscheibenoberfläche den Überdeckungsbereich des Bremssattels oder des Bremsenträgers.

Typischerweise werden jene Abschnitte des Bremsenträgers verstärkt ausgebildet, die mit der Auslaufseite der Bremsscheibe in Vorwärtsfahrtrichtung des Fahrzeuges korrespondieren. Diese Bereiche nehmen bei einem Bremsvorgang in Vorwärtsfahrt aus hoher Geschwindigkeit die höchsten Kräfte und Lasten auf, und sind demgemäß deutlich massiver auszulegen als jene Bereiche der Bremse, bei denen der Bremsbelag lediglich bei Rückwärtsfahrt aus der Bremse ausläuft.

Bei solchen asymmetrisch ausgebildeten Bremsenträgern ist stets sicherzustellen, dass diese korrekt ausgerichtet am Fahrzeug montiert werden. Schlimmstenfalls könnte eine Montage entgegen der vorgesetzten Montagerichtung dazu führen, dass einzelne Bauteile der Bremse aufgrund der asymmetrischen Ausbildung des Bremsenträgers bei Bremsvorgängen, bei denen hohe Kräfte involviert sind, versagen. Darüber hinaus bringt eine solche asymmetrische Ausgestaltung des Bremsenträgers typischerweise eine hohe Herstellungskomplexität und hohe Fertigungskosten mit sich, da eine Reihe von Bauteilen richtungsgebunden auszulegen sind.

Die WO 2015/049283 A1 offenbart eine Scheibenbremse mit einem Bremsenträger bei denen der Abstand der Trägerhörner zur Aufnahme eines reaktionsseitigen Bremsbelags größer ist, als der Abstand der Trägerhörner zur Aufnahme des zuspannseitigen Bremsbelags. Die Montage an eine Fahrzeugachse auf der linken Seite und auf der rechten Seite eines Fahrzeugs ist möglich. Die WO 2015/049283 A1 offenbart nicht, dass die Auslaufseite des Bremsenträgers gegenüber der Einlaufseite strukturell verstärkt ist.

Die DE 10 2008 003526 A1 offenbart einen, insbesondere für Nutzfahrzeuge ausgebildeten Bremsenträger mit einem zuspannseitigen Belagschacht und einen reaktionsseitigen Belagschacht zur Aufnahme von Bremsbelägen, wobei die Bremsbelagschächte durch je eine parallel zur Bremsscheibe verlaufende Strebe und zwei die Strebe begrenzenden gegenüberliegend angeordnete Belagträgerhörnern ausgebildet ist. Die DE 10 2008 003526 A1 kann in einer Ausführungsform einen asymmetrischen Bremsenträger aufweisen. Wie ein fahrzeugseitigen Falscheinbau überwunden wird, ist nicht offenbart.

Die US 6 135 246 A zeigt auch einen asymmetrischen Bremsenträger der reaktionsseitig in Richtung der Felge eines Fahrzeugs keine durchgehende Strebe aufweist.

Die WO 2015/178096 A1 zeigt auch einen asymmetrischen Bremsenträger, bei dem das Bremsträgerhorn einlaufseitig aus weniger Material gebildet ist, als das auslaufseitige Bremsträgerhorn.

Die WO 2017/178096 A1 offenbart eine Scheibenbremse mit einen symmetrischen Bremsenträger und einen Bremssattel, der einlaufseitig einen Laufrichtungsindikator aufweist. Der Laufrichtungsindikator auf dem Bremssattel aufgeklebt und ist für die Erstmontage zur temporären Anzeige der Laufrichtung ausgelegt. Eine dauerhafte Befestigung des Laufrichtungsindikators an dem Bremssattel ist nicht vorgesehen.

Es ist daher Aufgabe der vorliegenden Erfindung, eine Fahrzeugbremse der eingangs bezeichneten Art dahingehend weiterzubilden, dass die im Stand der Technik aufgefundenen Nachteile möglichst weitgehend behoben werden. Insbesondere ist eine Fahrzeugbremse anzugeben, die im Hinblick auf im Fahrzeugbetrieb typischerweise auftretende Bremslasten optimiert ist und dabei wenig komplex und kostengünstig herstellbar ist und bei der gleichzeitig sichergestellt ist, dass diese in korrekter Ausrichtung an einem Fahrzeug montiert wird.

Erfindungsgemäß wird die Aufgabe bei einer Fahrzeugbremse der eingangs genannten Art dadurch gelöst, dass der Bremsenträger an der Auslaufseite gegenüber der Einlaufseite strukturell verstärkt ist und an dem Bremsenträger mindestens ein Laufrichtungsindikator zur Anzeige der ersten Rotationsrichtung angeordnet ist.

Die Erfindung macht sich die Erkenntnis zunutze, dass eine asymmetrische Ausgestaltung des Bremsenträgers, bei der die Auslaufseite eine höhere Materialstärke aufweist als die Einlaufseite, sich besonders gut zur Kompensation der im Fahrzeugvorwärtsbetrieb auftretenden Bremslasten eignet und gleichzeitig für den Fahrzeugrückwärtsbetrieb nicht überdimensioniert ist.Bei einer solchen Komponentenauslegung ist jedoch sicherzustellen, dass die Fahrzeugbremse mit dem richtungsabhängig ausgestalteten Bremsenträger korrekt ausgerichtet am Fahrzeug montiert ist. Die Anordnung eines Laufrichtungsindikators zur Anzeige der ersten Rotationsrichtung, die erfindungsgemäß mit der Hauptbetriebsrichtung eines Fahrzeuges - also insbesondere der Vorwärtsrichtung - korrespondiert, stellt sicher, dass der Bremsenträger korrekt montiert wird. Dabei wird ausschließlich das richtungsgebunden ausgelegte Bauteil "Bremsenträger" mit einem Laufrichtungsindikator versehen. Vorteilhaft wird so eine hohe Montagesicherheit erzielt, Fertigungskosten werden reduziert und es kann gleichzeitig eine hohe Variabilität hinsichtlich der Verwendung aller übrigen, richtungsungebundenen ausgebildeten Bauteile der Fahrzeugbremse sichergestellt werden.

Die Erfindung wird dadurch weitergebildet, dass der Bremsenträger an der Einlaufseite und/oder der Auslaufseite eine Trägerwange aufweist, welche den Aufnahmeraum einer Bremsscheibe zumindest teilweise umschließt und eine dem Aufnahmeraum abgewandte Stirnfläche aufweist, wobei der mindestens eine Laufrichtungsindikator an der Stirnfläche angeordnet ist.

Der Bremsenträger weist damit insgesamt eine rahmenähnliche Formgebung auf, wobei jeweils die der Einlaufseite und der Auslaufseite zugeordneten Rahmenabschnitte als Trägerwange bezeichnet werden. Diese Trägerwangen umschließen damit bevorzugt die äußere Begrenzungsfläche des Aufnahmeraumes einer Bremsscheibe zumindest teilweise. Mindestens eine der Trägerwangen weist dabei bevorzugt Stirnflächen auf, welche auch im montierten Zustand der Fahrzeugbremse sowohl dann sichtbar sind, wenn die Fahrzeugbremse als separate Baugruppe montiert ist als auch wenn die Fahrzeugbremse am Fahrzeug montiert ist. Wird also der Laufrichtungsindikator an besagten Stirnflächen angeordnet, ist in jedem Montagezustand sicher für den Monteur erkennbar, auf welche Weise die Bremse zu montieren ist und gleichsam ist nach erfolgreicher Montage leicht ersehbar, inwieweit die Montage ordnungsgemäß erfolgt ist.

Der Bremsenträger weist vorzugsweise eine Zuspannseite und eine Reaktionsseite auf. Die Trägerwange erstreckt sich vorzugsweise von der Zuspannseite bis zur Reaktionsseite.

Gemäß einer bevorzugten Ausführungsform ist die strukturelle Verstärkung in Form einer, mehrerer oder sämtlicher der folgenden ausgebildet: - Der Bremsenträger weist an der Auslaufseite eine höhere Materialstärke auf als an der Einlaufseite,
- die Breite und/oder die Höhe einer Trägerwange an der Auslaufseite ist größer als die Breite und/oder die Höhe einer Trägerwange an der Einlaufseite, oder
- die Höhe einer Trägerwange an einer Zuspannseite ist größer als die Höhe hw einer Trägerwange an einer Reaktionsseite.

Die höchsten Bremskräfte entstehen typischerweise dann, wenn sich das Fahrzeug mit einer hohen Vorwärtsgeschwindigkeit fortbewegt und aus dieser stark verzögert wird. Dabei ergeben sich die größten zu tolerierenden Kräfte und Momente auf Seiten des Bremsenträgers an jener Seite, die mit der Auslaufseite der Bremsscheibe bezogen auf die Vorwärtsfahrt des Fahrzeuges korrespondiert. Auch ergeben sich auf der Zuspannseite einer Bremse größere zu tolerierenden Kräfte und Momente als an der Reaktionsseite der Bremse. Eine korrespondierende Bauteildimensionierung trägt unterschiedlichen Kräfteverhältnissen an der Zuspannseite und der Reaktionsseite Rechnung und dient mithin der Material- und Gewichtsersparnis verglichen mit vollsymmetrisch ausgelegten Bauteilen.

Gemäß einer bevorzugten Ausführungsform ist der Laufrichtungsindikator als Richtungsanzeigepfeil ausgebildet, welcher mit einer Pfeilspitze in Richtung der ersten Rotationsrichtung weist. Der Vorteil eines solchen Richtungspfeiles liegt darin, dass ein solcher typischerweise keinen Interpretationsspielraum bezüglich der bevorzugten Laufrichtung offen lässt. Mit anderen Worten ist ein solcher Pfeil auch über unterschiedliche Kulturkreise hinweg für Montage und Bedienpersonal eindeutig mit der bevorzugten Laufrichtung in Verbindung bringbar.

Der Bremsenträger ist erfindungsgemäß als einstückiges Bauteil, insbesondere als einstückiges Gussteil mit mindestens einem angeformten Richtungsanzeigepfeil ausgebildet. Dabei ist bevorzugt, dass das entsprechende zu dem Richtungspfeil gehörige Positiv oder Negativ bereits in der Gussform ausgebildet ist und der Pfeil somit unmittelbar infolge des Gießvorganges auf dem Bremsenträger aufgebracht wird.

Die Fahrzeugbremse ist weiterhin vorzugsweise dergestalt ausgebildet, dass der Richtungsanzeigepfeil erhaben gegenüber einer Oberfläche des Bremsenträgers, insbesondere gegenüber der Stirnfläche, ausgebildet ist. Eine erhabene Ausrichtung des Anzeigepfeils gegenüber der Oberfläche des Bremsengträgers fördert insgesamt die Ertastbarkeit und Erkennbarkeit desselben. So werden Fahrzeugbremsen typischerweise häufig unter jedenfalls nur begrenzt optimalen Lichtverhältnissen montiert, sodass einer haptischen Wahrnehmbarkeit eines solchen Pfeiles insbesondere in solchen Umgebungen eine hohe Bedeutung zukommt.

Gemäß einer alternativen Ausführungsform ist bevorzugt, dass der Richtungsanzeigepfeil als Ausnehmung gegenüber einer Oberfläche des Bremsenträgers, insbesondere gegenüber der Stirnfläche ausgebildet ist. Bei dieser Ausnehmung kann es sich prinzipiell um eine Vertiefung gegenüber der Oberfläche des Bremsenträgers handeln, oder aber um eine vollständige Materialausnehmung, welche bereits beim Gießen etwa in dem Bremsenträger eingebracht werden kann oder aber im Rahmen eines sich an das Gießen anschließenden Bearbeitungsschrittes.

Gemäß einer alternativen Ausführungsform ist ferner bevorzugt, dass die Länge des Richtungsanzeigepfeils mindestens 25 mm beträgt und die Breite des Richtungsanzeigepfeils mindestens 15 mm beträgt. Eine derartige Mindestdimensionierung des Richtungsanzeigepfeils stellt sicher, dass dieser auch unter schlechten Sichtbedingungen sicher erkenn- und ertastbar bleibt. Ferner ist bevorzugt, dass der Richtungsanzeigepfeil eine Höhe oder Tiefe gegenüber einer Oberfläche des Bremsenträgers von mindestens 0,5 mm aufweist, wobei eine derartige Dimensionierung auch hier sicherstellt, dass der Richtungspfeil sicher erkannt und ertastet werden kann.

Darüber hinaus weist der Richtungsanzeigepfeil bevorzugt eine äußere Signallackschicht zur Verbesserung der optischen Wahrnehmbarkeit auf. Die äußere Signallackschicht ist dabei bevorzugt in einer Signalfarbe, wie beispielsweise rot, ausgestaltet. Darüber hinaus ist bevorzugt, dass der Richtungsanzeigepfeil eine fluoreszierende Beschichtung aufweist. Im Werkstattbetrieb kann damit unter Verwendung einer dazu eingerichteten Lichtquelle eine Sichtbarkeit des Richtungsanzeigepfeils hergestellt werden, falls aus unterschiedlichen Gründen nicht erwünscht ist, dass dieser dauerhaft und für jedermann sichtbar ist.

Gemäß einer bevorzugten Ausführungsform weist der Richtungsanzeigepfeil an seiner Oberfläche darüber hinaus eine Riffelung auf. Eine gute haptische Wahrnehmbarkeit des Richtungsanzeigepfeils wird damit gefördert.

Die Erfindung wird dadurch weitergebildet, dass der Bremsenträger jeweils mindestens ein Trägerhorn zur Führung und Abstützung des mindestens einen Bremsbelags an der Einlaufseite und der Auslaufseite aufweist, wobei das Trägerhorn an der Auslaufseite eine größere Höhe aufweist als an der Einlaufseite. Wie bereits ausgeführt, entstehen die höchsten Bremskräfte typischerweise dann, wenn sich das Fahrzeug mit einer hohen Vorwärtsgeschwindigkeit fortbewegt und aus dieser stark verzögert wird. Dabei ergeben sich die größten zu tolerierenden Kräfte und Momente auf Seiten des Bremsenträgers an jener Seite, die mit der Auslaufseite der Bremsscheibe bezogen auf die Vorwärtsfahrt des Fahrzeuges korrespondiert. Aus diesem Grund ist bevorzugt, dass das Trägerhorn an der Auslaufseite eine größere Höhe aufweist als an der Einlaufseite. Auf der anderen Seite liegt ein wesentlicher Vorteil einer asymmetrischen Ausgestaltung des Bremsenträgers auch darin, dass auf der Einlaufseite ein Trägerhorn mit einer geringeren Höhe ausreichend ist, die Bremsbeläge zu halten. Durch diese optimierte Ausgestaltung des Bremsenträgers lässt sich insgesamt Bauraum und Bauteilmasse einsparen.

Die Höhe der Trägerhörner an der Einlaufseite und der Auslaufseite erstreckt sich dabei bevorzugt in Radialrichtung bezogen auf die Bremsscheibe.

Die Erfindung ist vorstehend unter Bezugnahme auf eine Fahrzeugbremse beschrieben worden. In einem weiteren Aspekt betrifft die Erfindung ein Fahrzeug, insbesondere Nutzfahrzeug, mit einer Fahrzeugbremse. Die Erfindung löst die eingangs bezeichnete Aufgabe in Bezug auf das Fahrzeug, indem die Fahrzeugbremse nach einer der vorstehend beschriebenen bevorzugen Ausführungsformen ausgebildet ist.

Hinsichtlich der Vorteile eines solchen Fahrzeuges sei auf die obigen Ausführungen verwiesen und es werden diese hiermit einbezogen. Die Erfindung wir nachfolgend anhand bevorzugter Ausführungsbeispiele unter Bezugnahme auf die beigefügten Figuren näher beschrieben.

Hierbei zeigen:
- - Figur 1: ein erstes Ausführungsbeispiel einer erfindungsgemäßen Fahrzeugbremse in einer perspektivischen Ansicht;
- - Figur 2: das Ausführungsbeispiel der erfindungsgemäßen Fahrzeugbremse gemäß Figur 1 in einer Seitenansicht;
- - Figur 3: einen Bremsenträger der erfindungsgemäßen Fahrzeugbremse gemäß Figur 1 und 2 in einer perspektivischen Ansicht;
- - Figur 4: den erfindungsgemäßen Bremsenträger gemäß Figur 3 in einer weiteren perspektivischen Ansicht;
- - Figur 5: den erfindungsgemäßen Bremsenträger gemäß der Figuren 3 bis 4 in einer weiteren perspektivischen Ansicht;
- - Figur 6: den erfindungsgemäßen Bremsenträger gemäß der Figuren 3 bis 5 in einer Seitenansicht;
- - Figur 7: ein alternatives Ausführungsbeispiel eines erfindungsgemäßen Bremsenträgers in einer Seitenansicht; und
- - Figur 8: den erfindungsgemäßen Bremsenträger gemäß Figuren 3 bis 6 in einer weiteren Seitenansicht.

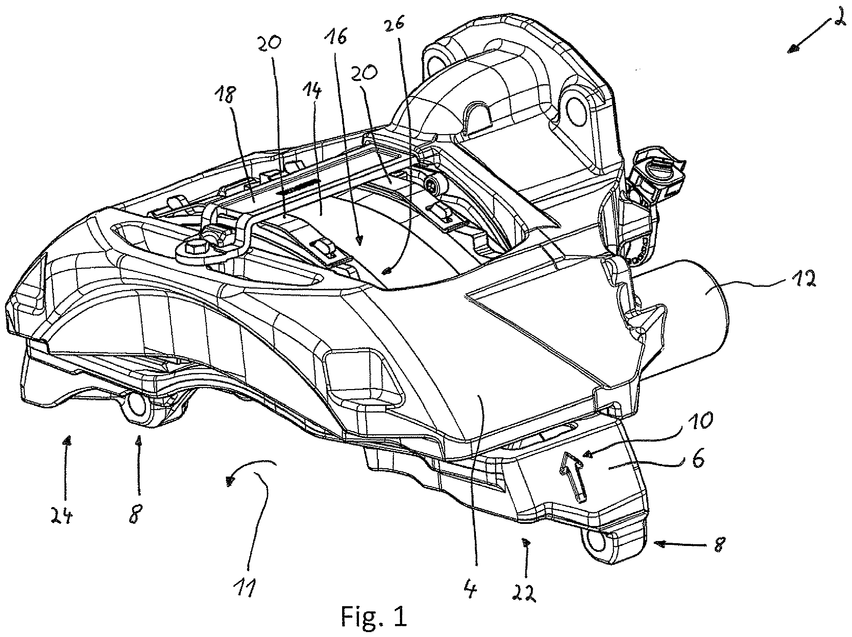

Figur 1 zeigt eine Fahrzeugbremse 2, welche einen Bremsenträger 6 sowie einen Bremssattel 4 aufweist. Der Bremsenträger 6 wird über Befestigungsabschnitte 8 auf geeignete Weise mit einem Fahrzeug verbunden. Die vorliegende Fahrzeugbremse 2 ist als Gleitsattelscheibenbremse ausgebildet, bei der der Bremssattel 4 axial bewegbar relativ zu dem Bremsenträger 6 angeordnet ist. Der Bremssattel 4 gleitet vorliegend auf Führungsbolzen 12, welche wiederum mit dem Bremsenträger 6 verbunden sind.

Ferner weist die Fahrzeugbremse 2 einen Bremsbelag 14 an einer Zuspannseite der Fahrzeugbremse 2 auf sowie einen Bremsbelag 26 auf einer Reaktionsseite der Bremse 2. Zwischen den Bremsbelägen 14 und 26 wird ein Aufnahmeraum für eine Bremsscheibe 16 aufgespannt. Wird die Fahrzeugbremse 2 an einem Fahrzeug montiert, so ist eine Bremsscheibe in dem Aufnahmeraum 16 angeordnet. Die Bremsbeläge 14 und 26 sind in dem Bremssattel 4 axial verschiebbar geführt und abgestützt. Die Bremsbeläge 14 und 26 werden mittels eines Niederhaltebügels 18, der auf Niederhaltefedern 20 wirkt, in Richtung des Bremsenträgers 6 gedrückt. Im Falle eines Wechsels der Bremsbeläge 14, 26 können diese nach dem Entfernen des Niederhaltebügels 18 und der Niederhaltefedern 20 aus der Fahrzeugbremse 2 entnommen werden, ohne dass eine weitergehende Demontage der Fahrzeugbremse 2 erforderlich ist.

Wird die Fahrzeugbremse 2 betätigt, so wird auf den Bremsbelag 14 eine Zuspannkraft in Richtung einer in dem Aufnahmeraum für die Bremsscheibe 16 angeordneten Bremsscheibe aufgebracht. Mittels der gleitenden Lagerung des Bremssattels 4 wird zusätzlich bewirkt, dass auch der zweite Bremsbelag 26 in Richtung einer Bremsscheibe auf der Reaktionsseite der Bremse gedrückt wird. In diesem Fall bewegt sich der Bremssattel 4 gleitend auf den Führungsbolzen 12 in Richtung einer in dem Aufnahmeraum für die Bremsscheibe 16 angeordneten Bremsscheibe. Wird keine Zuspannkraft mehr auf den Bremsbelag 14 aufgebracht, so gleitet auch der Bremssattel 4 sowie der Bremsbelag 26 zurück in Richtung einer Ausgangs- oder Lüftstellung. Die Bremsscheibe steht nun nicht mehr in Kontakt mit den Bremsbelägen 14 und 26 und es wird keine Bremswirkung mehr entfaltet.

Die Fahrzeugbremse 2 ist an eine erste Rotationsrichtung 11 einer Bremsscheibe angepasst. Diese entspricht bei Fahrzeugen typischerweise der Fahrzeugvorwärtsrichtung. Bezogen auf diese erste Rotationsrichtung 11 weist der Bremsenträger 6 eine Einlaufseite 22 auf, an der eine Bremsscheibe gewissermaßen in den Bremsenträger 6 einläuft - also an der mit anderen Worten ein Abschnitt einer Bremsscheibenoberfläche bei Rotation in die erste Rotationsrichtung 11 derselben das erste Mal von dem Bremsenträger 6 zumindest teilweise überdeckt wird - sowie eine Auslaufseite 24, an der ein solcher gedachter Abschnitt einer Bremsscheibenoberfläche den Überdeckungsbereich des Bremsenträgers 6 wieder verlässt.

Bei Fahrzeugbremsen 2 treten bei hohen Verzögerungen aus der Vorwärtsfahrt die höchsten Kräfte und Lasten an der Auslaufseite 24 auf. Aus diesem Grund ist der Bremsenträger 6, wie in nachfolgenden Figuren noch detailliert werden wird, an der Auslaufseite 24 des Bremsenträgers 6 widerstandsfähiger ausgelegt als an der Einlaufseite 22. Dieses bedingt, dass eine Montage der Fahrzeugbremse 2 entgegen der ersten und bevorzugten Rotationsrichtung einer Bremsscheibe schlimmstenfalls dazu führen kann, dass die Fahrzeugbremse 2 bei hohen Verzögerungen mit hohen Bremskräften und Lasten versagen würde. Zur Sicherstellung einer bezüglich der ersten und bevorzugten Rotationsrichtung 11 korrekten Montage, ist auf dem Bremsenträger 6 daher ein Laufrichtungsindikator 10, der vorliegend als Richtungspfeil 10 ausgebildet ist, angeordnet. Der Richtungsanzeigepfeil 10 ist so auf dem Bremsenträger 6 angeordnet, dass dieser sowohl dann sicher erkennbar ist, wenn die Fahrzeugbremse 2 wie in Figur 1 vollständig montiert ist, als auch wenn sich die Fahrzeugbremse 2 in montiertem Zustand an einem Fahrzeug befindet.

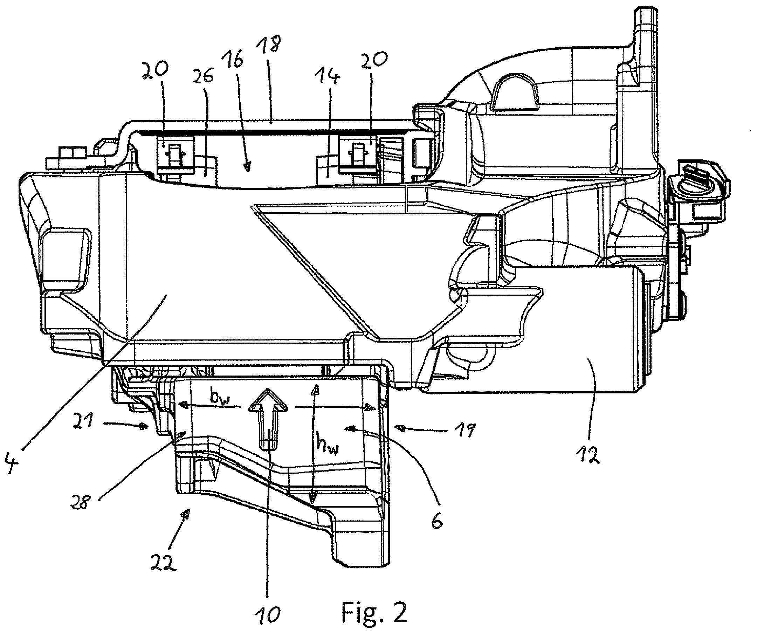

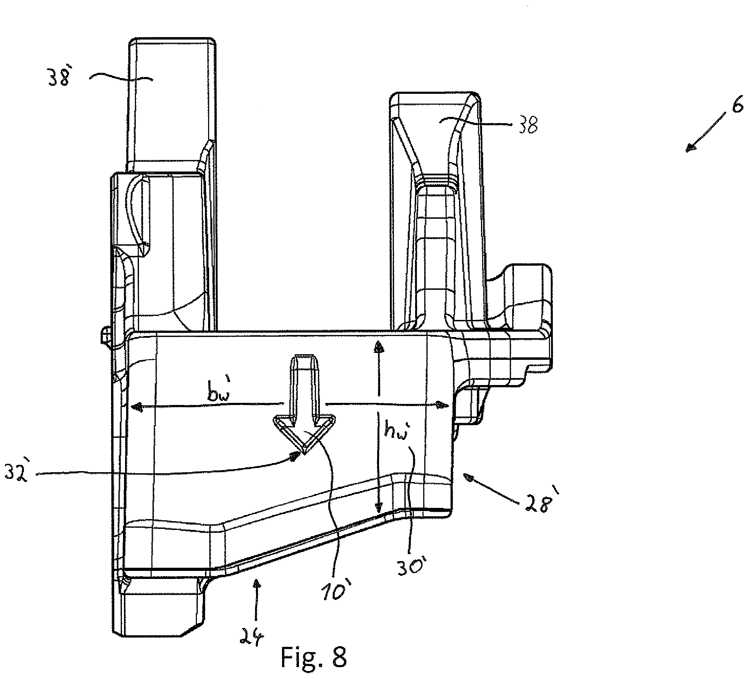

Figur 2 zeigt das Ausführungsbeispiel der Fahrzeugbremse 2 gemäß Figur 1 in einer Seitenansicht. Aus Figur 2 lässt sich entnehmen, dass der Richtungsanzeigepfeil 10 auch aus dieser abweichenden Perspektive gut und deutlich zu erkennen ist, sodass eine Fehlmontage der erfindungsgemäßen Fahrzeugbremse 2 sicher verhindert wird. Der Figur ist ferner zu entnehmen, dass die Breite bw und die Höhe hw einer Trägerwange 28 an der Einlaufseite 22 geringer ist als die Breite bw' und die Höhe hw' einer Trägerwange 28' an der an der Auslaufseite 24 (vgl. hierzu auch Fig. 8). Auch ist die Höhe hw der Trägerwange 28 an einer Zuspannseite 19 größer als die Höhe hw der Trägerwange 28 an einer Reaktionsseite 21.

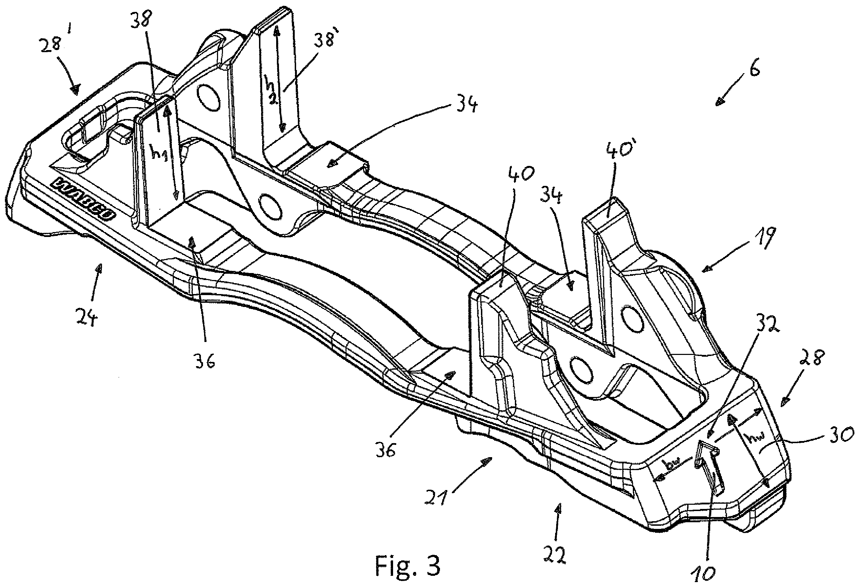

Figur 3 zeigt den Bremsenträger 6 in einer perspektivischen Darstellung. Der Bremsenträger 6 weist Bremsbelagaufnahmen 34 und 36 zur Aufnahme der Bremsbeläge 14 und 26 auf. Die Bremsbelagaufnahmen 34 und 36 führen die Bremsbeläge 14 sowie 26 axial verschiebbar und stützen diese in Tangentialrichtung bezogen auf die Rotationsrichtung einer Bremsscheibe ab. In der Tangentialrichtung werden die Bremsbeläge 14 und 26 von Trägerhörnern 38, 38', 40, 40' gehalten. Dabei sind die Trägerhörner 38, 38' an der Auslaufseite 24 angeordnet und die Trägerhörner 40 sowie 40' an der Einlaufseite 22.

Der Bremsenträger 6 weist vorliegend einen rahmenförmigen Aufbau auf.

Die Bremsbelagaufnahmen 34 und 36 verbindend und gleichsam den Aufnahmeraum für die Bremsscheibe 16 umschließend, sind an dem Bremsenträger an seinen Stirnseiten Trägerwangen 28 angeordnet. Diese Trägerwangen wiederum weisen Stirnflächen 30 auf, wobei der Richtungsanzeigepfeil 10 bevorzugt auf diesen Stirnflächen 30 angeordnet ist. Wie bereits ausgeführt, sind die Stirnflächen 30 mit dem Richtungsanzeigepfeil 10 auch dann gut und omnidirektional sichtbar, wenn der Bremsenträger 6 an der Fahrzeugbremse 2 und an einem Fahrzeug montiert ist. Die Trägerhörner 38, 38', 40 sowie 40' weisen Höhen h1 bis h4 auf. So weist das Trägerhorn 38 die Höhe h1 auf, das Trägerhorn 38' die Höhe h2, das Trägerhorn 40 die Höhe h4, sowie das Trägerhorn 40' die Höhe h3.

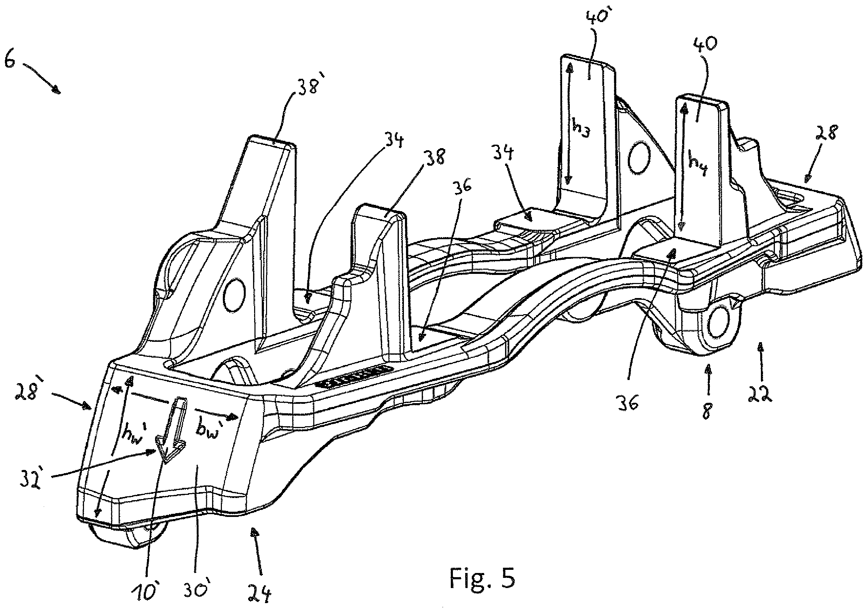

Wie Figur 3 zu entnehmen ist, weicht die Auslegung der Trägerhörner 38', 40' an der Zuspannseite 19 ab von der Gestaltung der Trägerhörner 38 und 40 auf der Reaktionsseite 21. So weisen die Trägerhörner 38', 40' an der Zuspannseite 19 größere Höhen h2 sowie h3 (vgl. Fig. 5) auf als die korrespondierenden Trägerhörner 38, 40 an der Reaktionsseite 21 (h1 sowie h4). Auch ist die Höhe h2 des Trägerhorns 38' auf der Auslaufseite 24 größer gewählt als bei dem Trägerhorn 40' auf der Einlaufseite 22. Mithin ist der Bremsenträger 6 bezogen auf die Laufrichtung einer Bremsscheibe asymmetrisch ausgestaltet. Auf der Auslaufseite 24, auf der größere Bremskräfte und Lasten bei Fahrzeugvorwärtsfahrt auftreten, weist der Bremsenträger 6 höhere Materialstärken auf.

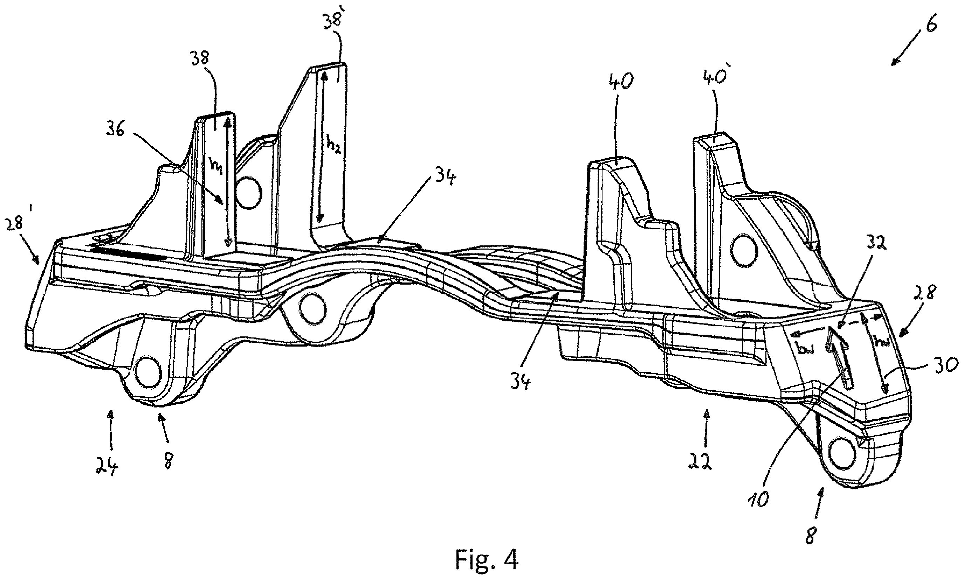

Figur 4 zeigt das Ausführungsbeispiel des Bremsenträgers 6 gemäß Figur 3 aus einer weiteren Perspektive. Gut erkennbar sind hier die Befestigungsabschnitte 8, mit denen der Bremsenträger 6 an einem Fahrzeug, insbesondere an einem Fahrzeugflansch, befestigt werden kann. Deutlich erkennbar ist ebenfalls die abweichende Gestaltung der Trägerhörner 38, 38' auf der Auslaufseite 24 im Vergleich zur Ausgestaltung der Trägerhörner 40, 40' auf der Einlaufseite 22.

Figur 5 zeigte eine weitere perspektivische Darstellung des Bremsenträgers 6 gemäß der Figuren 3 und 4. Wie aus dieser Perspektive erkennbar ist, weist der Bremsenträger 6 an der dem Richtungsanzeigepfeil 10 gegenüberliegenden Trägerwange 28 einen weiteren Richtungsanzeigepfeil 10' auf. Dieser ist auf einer zweiten Stirnfläche 30' angeordnet. Die Pfeilspitze 32' weist erneut in Richtung der ersten Rotationsrichtung 11 einer Bremsscheibe und deutet damit unmissverständlich in Richtung der zu berücksichtigenden Montagerichtung.

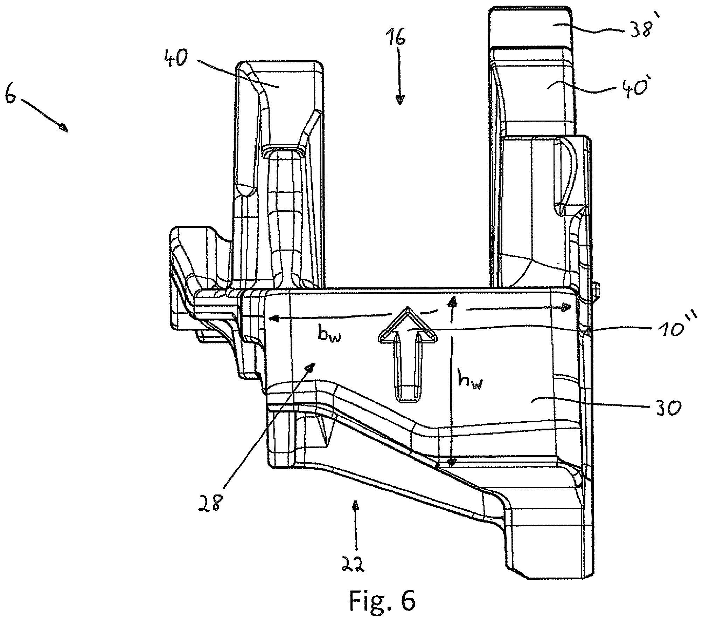

In Figur 6 ist eine Seitenansicht des Bremsenträgers 6 gemäß der Figuren 3 bis 5 gezeigt, wobei aus der Figur 6 deutlich die unterschiedliche Ausgestaltung der Trägerhörner 38, 38' auf der Auslaufseite 24 im Vergleich zur Ausgestaltung der Trägerhörner 40, 40' auf der Einlaufseite 22 deutlich wird. Der in der Figur gezeigte Richtungsanzeigepfeil 10" ist vertieft gegenüber der Stirnfläche 30 ausgebildet.

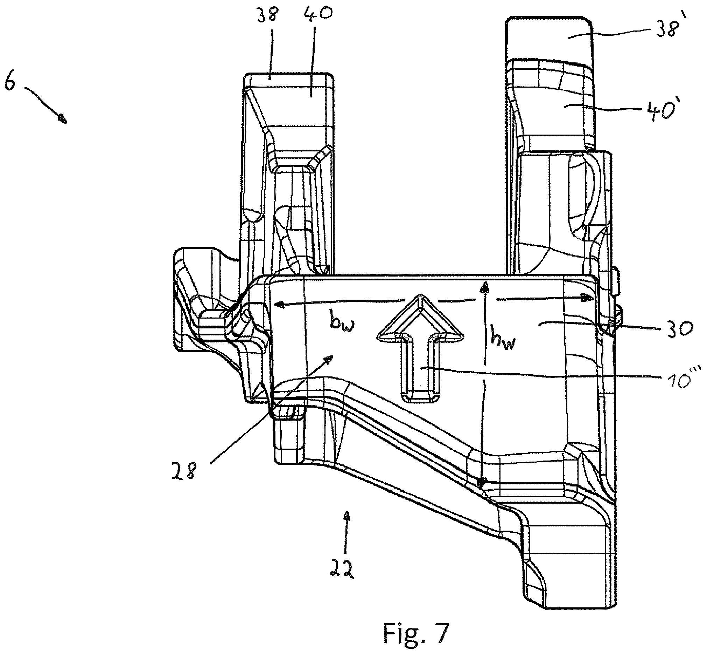

Figur 7 zeigt ein alternatives Ausführungsbeispiel eines Bremsenträgers 6, bei dem insbesondere die Geometrie des Richtungsanzeigepfeils 10‴ gegenüber dem Ausführungsbeispiel der Figuren 3 bis 6 verändert worden ist. Wie der Figur zu entnehmen ist, ist der Richtungsanzeigepfeil 10'" insbesondere breiter ausgebildet als in den eben genannten Ausführungsformen. Eine sichere Erkennbarkeit eines solchen Richtungsanzeigepfeils 10‴ kann hiermit unterstützt werden.

Ferner zeigt noch die Figur 8 einen Bremsenträger 6 gemäß Ausführungsbeispiel der Figuren 3 bis 6, wobei in der Figur 8 eine Seitenansicht auf die Auslaufseite 24 des Bremsenträgers 6 dargestellt ist. Der Laufrichtungsindikator 10' zeigt erneut die erste bzw. bevorzugte Rotationsrichtung 11 einer Bremsscheibe, wobei der Richtungsanzeigepfeil 10' auf der Stirnfläche 30' angeordnet ist. Aus der gewählten Perspektive sind die höher und breiter ausgebildeten Trägerhörner 38, 38' der Auslaufseite 24 des Bremsenträgers 6 und der Fahrzeugbremse 2 erkennbar.

### Bezugszeichenliste (Teil der Beschreibung)

- 2: Fahrzeugbremse
- 4: Bremssattel
- 6: Bremsenträger
- 8: Befestigungsabschnitte
- 10, 10', 10", 10‴: Laufrichtungsindikator / Richtungsanzeigepfeil
- 11: Erste Rotationsrichtung
- 12: Führungsbolzen
- 14: Bremsbelag
- 16: Aufnahmeraum für Bremsscheibe
- 18: Niederhaltebügel
- 19: Zuspannseite
- 20: Niederhaltefedern
- 21: Reaktionsseite
- 22: Einlaufseite
- 24: Auslaufseite
- 26: Bremsbelag
- 28, 28': Trägerwange
- 30, 30': Stirnfläche
- 32, 32': Pfeilspitze
- 34: Bremsbelagaufnahme
- 36: Bremsbelagaufnahme
- 38, 38': Trägerhorn
- 40, 40': Trägerhorn
- hw, hw': Höhe Trägerwange
- bw, bw': Breite Trägerwange
- h1, h2, h3, h4,: Höhe Trägerhorn

## Patentansprüche

1. Fahrzeugbremse (2), insbesondere Nutzfahrzeug-Scheibenbremse, mit einem Bremsenträger (6) mit mindestens einer Bremsbelagaufnahme (34, 36), mindestens einem Bremsbelag (14, 26), welcher in der Bremsbelagaufnahme (34, 36) axial verschiebbar geführt und abgestützt ist, und einem axial relativ zu dem Bremsenträger (6) bewegbaren Bremssattel (4), wobei der Bremsenträger (6) eine Einlaufseite (22) aufweist, an der eine Bremsscheibe bei einer Rotation in eine erste Rotationsrichtung (11) in den Bremsenträger (6) einläuft, und eine Auslaufseite (24), an der die Bremsscheibe bei Rotation in die erste Rotationsrichtung (11) aus dem Bremsenträger (6) ausläuft wobei der Bremsenträger (6) an der Auslaufseite (24) gegenüber der Einlaufseite (22) strukturell verstärkt ist, **dadurch gekennzeichnet, dass** an dem Bremsenträger (6) mindestens ein Laufrichtungsindikator (10, 10') zur Anzeige der ersten Rotationsrichtung (11) angeordnet ist und wobei der Bremsenträger (6) als einstückiges Bauteil, insbesondere als einstückiges Gussteil, mit mindestens einem als Laufrichtungsindikator angeformten Richtungsanzeigepfeil (10, 10') ausgebildet ist.

2. Fahrzeugbremse (2) nach Anspruch 1, **dadurch gekennzeichnet, dass** der Bremsenträger (6) an der Einlaufseite (22) und/oder der Auslaufseite (24) eine Trägerwange (28) aufweist, welche den Aufnahmeraum einer Bremsscheibe (16) zumindest teilweise umschließt und eine dem Aufnahmeraum (16) abgewandte Stirnfläche (30, 30') aufweist, wobei der mindestens eine Laufrichtungsindikator (10, 10') an der Stirnfläche (30, 30') angeordnet ist.

3. Fahrzeugbremse (2) nach einem der vorhergehenden Ansprüche, **dadurch gekennzeichnet, dass** die strukturelle Verstärkung in Form einer, mehrerer oder sämtlicher der folgenden ausgebildet ist:
- der Bremsenträger (6) weist an der Auslaufseite (24) eine höhere Materialstärke auf als an der Einlaufseite (22);
- die Breite bw und/oder die Höhe hw einer Trägerwange (28) an der Auslaufseite (24) ist größer als die Breite bw' und/oder die Höhe hw' einer Trägerwange (28) an der Einlaufseite (22);
- die Höhe hw einer Trägerwange (28) an einer Zuspannseite (19) ist größer als die Höhe hw einer Trägerwange (28) an einer Reaktionsseite (21).

4. Fahrzeugbremse (2) nach einem der vorhergehenden Ansprüche, **dadurch gekennzeichnet, dass** der Laufrichtungsindikator (10, 10') als Richtungsanzeigepfeil (10, 10') ausgebildet ist, welcher mit einer Pfeilspitze (32, 32') in Richtung der ersten Rotationsrichtung (11) weist.

5. Fahrzeugbremse (2) nach einem der vorhergehenden Ansprüche, **dadurch gekennzeichnet, dass** der Richtungsanzeigepfeil (10, 10') erhaben gegenüber einer Oberfläche des Bremsenträgers (6), insbesondere gegenüber der Stirnfläche (30, 30'), ausgebildet ist.

6. Fahrzeugbremse (2) nach einem der Ansprüche 1 bis 4, **dadurch gekennzeichnet, dass** der Richtungsanzeigepfeil (10, 10') als Ausnehmung gegenüber einer Oberfläche des Bremsenträgers (6), insbesondere gegenüber der Stirnfläche (30, 30'), ausgebildet ist.

7. Fahrzeugbremse (2) nach einem der Ansprüche 2 bis 6, **dadurch gekennzeichnet, dass** die Länge des Richtungsanzeigepfeils (10, 10') mindestens 25 mm beträgt und die Breite des Richtungsanzeigepfeils mindestens 15 mm beträgt.

8. Fahrzeugbremse (2) nach einem der Ansprüche 2 bis 7, **dadurch gekennzeichnet, dass** der Richtungsanzeigepfeil (10, 10') eine Höhe oder Tiefe gegenüber einer Oberfläche des Bremsenträgers (6) von mindestens 0,5 mm aufweist.

9. Fahrzeugbremse (2) nach einem der Ansprüche 2 bis 8, **dadurch gekennzeichnet, dass** der Richtungsanzeigepfeil (10, 10') eine äußere Signallackschicht zur Verbesserung der Wahrnehmbarkeit aufweist.

10. Fahrzeugbremse (2) nach einem der Ansprüche 2 bis 9, **dadurch gekennzeichnet, dass** der Richtungsanzeigepfeil (10, 10') an seiner Oberfläche eine Riffelung aufweist.

11. Fahrzeugbremse (2) nach einem der vorhergehenden Ansprüche, **dadurch gekennzeichnet, dass** der Bremsenträger (6) jeweils mindestens ein Trägerhorn (38, 38', 40, 40') zur Führung und Abstützung des mindestens einen Bremsbelags (14, 26) an der Einlaufseite (22) und der Auslaufseite (24) aufweist, wobei das Trägerhorn (38, 38') an der Auslaufseite (24) eine größere Höhe h aufweist als an der Einlaufseite (22).

12. Fahrzeug, insbesondere Nutzfahrzeug, mit einer Fahrzeugbremse (2), wobei die Fahrzeugbremse (2) nach einem der Ansprüche 1 bis 11 ausgebildet ist.

## Claims

1. Vehicle brake (2), in particular utility vehicle disc brake, with a brake carrier (6) with at least one brake pad receptacle (34, 36), at least one brake pad (14, 26) which is supported and is guided axially displaceably in the brake pad receptacle (34, 36), and a brake calliper (4) which can be moved axially relative to the brake carrier (6), the brake carrier (6) having an inlet side (22), on which a brake disc runs into the brake carrier (6) in the case of a rotation in a first rotational direction (11), and an outlet side (24), on which the brake disc runs out of the brake carrier (6) in the case of rotation in the first rotational direction (11), the brake carrier (6) being reinforced structurally on the outlet side (24) with respect to the inlet side (22), **characterized in that** at least one running direction indicator (10, 10') for indicating the first rotational direction (11) is arranged on the brake carrier (6), and the brake carrier (6) being configured as a single-piece component, in particular as a single-piece cast part, with at least one direction indicator arrow (10, 10') which is moulded integrally as a running direction indicator.

2. Vehicle brake (2) according to Claim 1, **characterized in that** the brake carrier (6) has a carrier cheek (28) on the inlet side (22) and/or the outlet side (24), which carrier cheek (28) encloses the receiving space of a brake disc (16) at least partially and has an end face (30, 30') which faces away from the receiving space (16), the at least one running direction indicator (10, 10') being arranged on the end face (30, 30').

3. Vehicle brake (2) according to either of the preceding claims, **characterized in that** the structural reinforcement is configured in the form of one, a plurality or all of the following:
- the brake carrier (6) has a higher material thickness on the outlet side (24) than on the inlet side (22);
- the width bw and/or the height hw of a carrier cheek (28) on the outlet side (24) is greater than the width bw' and/or the height hw' of a carrier cheek (28) on the inlet side (22);
- the height hw of a carrier cheek (28) on an application side (19) is greater than the height hw of a carrier cheek (28) on a reaction side (21).

4. Vehicle brake (2) according to one of the preceding claims, **characterized in that** the running direction indicator (10, 10') is configured as a direction indicator arrow (10, 10') which points with an arrow tip (32, 32') in the direction of the first rotational direction (11).

5. Vehicle brake (2) according to one of the preceding claims, **characterized in that** the direction indicator arrow (10, 10') is of elevated configuration in comparison with a surface of the brake carrier (6), in particular with respect to the end face (30, 30').

6. Vehicle brake (2) according to one of Claims 1 to 4, **characterized in that** the direction indicator arrow (10, 10') is configured as a recess with respect to a surface of the brake carrier (6), in particular with respect to the end face (30, 30').

7. Vehicle brake (2) according to one of Claims 2 to 6, **characterized in that** the length of the direction indicator arrow (10, 10') is at least 25 mm, and the width of the direction indicator arrow is at least 15 mm.

8. Vehicle brake (2) according to one of Claims 2 to 7, **characterized in that** the direction indicator arrow (10, 10') has a height or depth of at least 0.5 mm with respect to a surface of the brake carrier (6).

9. Vehicle brake (2) according to one of Claims 2 to 8, **characterized in that** the direction indicator arrow (10, 10') has an external signal paint layer for improving the discernability.

10. Vehicle brake (2) according to one of Claims 2 to 9, **characterized in that** the direction indicator arrow (10, 10') has grooving on its surface.

11. Vehicle brake (2) according to one of the preceding claims, **characterized in that** the brake carrier (6) has in each case at least one carrier horn (38, 38', 40, 40') for guiding and supporting the at least one brake pad (14, 26) on the inlet side (22) and the outlet side (24), the carrier horn (38, 38') on the outlet side (24) having a greater height h than on the inlet side (22).

12. Vehicle, in particular utility vehicle, with a vehicle brake (2), the vehicle brake (2) being configured according to one of Claims 1 to 11.

## Revendications

1. Frein de véhicule (2), notamment frein à disque de véhicule utilitaire, comprenant un support de frein (6) avec au moins un logement de garniture de frein (34, 36), au moins une garniture de frein (14, 26) qui est guidée et soutenue de manière axialement déplaçable dans le logement de garniture de frein (34, 36), et un étrier de frein (4) mobile axialement par rapport au support de frein (6), le support de frein (6) présentant un côté d'entrée (22) sur lequel un disque de frein pénètre dans le support de frein (6) lors d'une rotation dans une première direction de rotation (11), et un côté de sortie (24) sur lequel le disque de frein sort du support de frein (6) lors de la rotation dans la première direction de rotation (11), le support de frein (6) étant renforcé structurellement sur le côté de sortie (24) par rapport au côté d'entrée (22), **caractérisé en ce que** sur le support de frein (6) est agencé au moins un indicateur de direction de marche (10, 10') pour indiquer la première direction de rotation (11) et le support de frein (6) étant réalisé sous forme de pièce monobloc, notamment sous forme de pièce coulée monobloc, avec au moins une flèche indicatrice de direction (10, 10') formée en tant qu'indicateur de direction de marche.

2. Frein de véhicule (2) selon la revendication 1, **caractérisé en ce que** le support de frein (6) présente, sur le côté d'entrée (22) et/ou sur le côté de sortie (24), une joue de support (28) qui entoure au moins partiellement l'espace de réception d'un disque de frein (16) et présente une surface frontale (30, 30') détournée de l'espace de réception (16), l'au moins un indicateur de direction de marche (10, 10') étant agencé sur la surface frontale (30, 30').

3. Frein de véhicule (2) selon l'une quelconque des revendications précédentes, **caractérisé en ce que** le renforcement structurel est réalisé sous la forme d'un, de plusieurs ou de tous les éléments suivants :
- le support de frein (6) présente une épaisseur de matériau plus élevée sur le côté de sortie (24) que sur le côté d'entrée (22) ;
- la largeur bw et/ou la hauteur hw d'une joue de support (28) sur le côté de sortie (24) est supérieure à la largeur bw' et/ou la hauteur hw' d'une joue de support (28) sur le côté d'entrée (22) ;
- la hauteur hw d'une joue de support (28) sur un côté de serrage (19) est supérieure à la hauteur hw d'une joue de support (28) sur un côté de réaction (21) .

4. Frein de véhicule (2) selon l'une quelconque des revendications précédentes, **caractérisé en ce que** l'indicateur de direction de marche (10, 10') est réalisé sous forme de flèche indicatrice de direction (10, 10'), qui est orientée avec une pointe de flèche (32, 32') dans la direction de la première direction de rotation (11).

5. Frein de véhicule (2) selon l'une quelconque des revendications précédentes, **caractérisé en ce que** la flèche indicatrice de direction (10, 10') est réalisée en relief par rapport à une surface du support de frein (6), notamment par rapport à la surface frontale (30, 30').

6. Frein de véhicule (2) selon l'une quelconque des revendications 1 à 4, **caractérisé en ce que** la flèche indicatrice de direction (10, 10') est réalisée sous forme d'évidement par rapport à une surface du support de frein (6), notamment par rapport à la surface frontale (30, 30').

7. Frein de véhicule (2) selon l'une quelconque des revendications 2 à 6, **caractérisé en ce que** la longueur de la flèche indicatrice de direction (10, 10') est d'au moins 25 mm et la largeur de la flèche indicatrice de direction est d'au moins 15 mm.

8. Frein de véhicule (2) selon l'une quelconque des revendications 2 à 7, **caractérisé en ce que** la flèche indicatrice de direction (10, 10') présente une hauteur ou une profondeur par rapport à une surface du support de frein (6) d'au moins 0,5 mm.

9. Frein de véhicule (2) selon l'une quelconque des revendications 2 à 8, **caractérisé en ce que** la flèche indicatrice de direction (10, 10') présente une couche de vernis de signalisation extérieure pour améliorer la perceptibilité.

10. Frein de véhicule (2) selon l'une quelconque des revendications 2 à 9, **caractérisé en ce que** la flèche indicatrice de direction (10, 10') présente sur sa surface une cannelure.

11. Frein de véhicule (2) selon l'une quelconque des revendications précédentes, **caractérisé en ce que** le support de frein (6) présente respectivement au moins une corne de support (38, 38', 40, 40') pour le guidage et le soutien de l'au moins une garniture de frein (14, 26) sur le côté d'entrée (22) et sur le côté de sortie (24), la corne de support (38, 38') présentant une hauteur h supérieure sur le côté de sortie (24) que sur le côté d'entrée (22).

12. Véhicule, notamment véhicule utilitaire, avec un frein de véhicule (2), le frein de véhicule (2) étant réalisé selon l'une quelconque des revendications 1 à 11.
